# EUROPÄISCHE PATENTSCHRIFT

(11) **EP 1 722 984 B1**
(45) Veröffentlichungstag und Bekanntmachung des Hinweises auf die Patenterteilung: **04.06.2008**
(21) Anmeldenummer: 05707499.9
(22) Anmeldetag: 18.02.2005
(51) Int. Cl.: B41M 5/26, B41M 5/28, C08K 7/00, B29C 65/16

(54) **DURCH FARBMITTEL TRANSPARENT, TRANSLUZENT ODER GEDECKT EINGEFÄRBTE LASERSCHWEISSBARE KUNSTSTOFFMATERIALIEN**
LASER-WELDABLE WHICH ARE TRANSPARENTLY, TRANSLUCENTLY OR OPAQUELY DYED BY MEANS OF COLORANTS
MATERIAUX PLASTIQUES POUVANT ETRE SOUDES AU LASER, TEINTES A L'AIDE DE COLORANTS DE MANIERE TRANSPARENTE, TRANSLUCIDE OU OPAQUE

(30) Priorität: 04.03.2004 DE 202004003362 U; 22.10.2004 DE 102004051457
(43) Veröffentlichungstag der Anmeldung: 22.11.2006
(73) Patentinhaber: Evonik Degussa GmbH, 40474 Düsseldorf (DE)
(72) Erfinder: HÄGER, Harald, 63579 Freigericht (DE); HASSKERL, Thomas, 61476 Kronberg (DE); ITTMANN, Günther, 64823 Gross-Umstadt (DE); WURSCHE, Roland, 48249 Dülmen (DE); SCHÜBEL, Klaus-Dieter, 45657 Recklinghausen (DE)
(86) Internationale Anmeldenummer: PCT/EP2005/001687
(87) Internationale Veröffentlichungsnummer: WO 2005/084955

(56) Entgegenhaltungen:
- WO-A-02/060988
- WO-A-20/05021244

## Beschreibung

Die vorliegende Erfindung betrifft durch Farbmittel transparent, transluzent oder gedeckt eingefärbte Kunststoffmaterialien, die durch einen Gehalt an nanoskaligen lasersensitiven Partikeln laserschweißbar sind, sowie ein Verfahren zur Herstellung derartiger Kunststoffmaterialien und deren Verwendung.

Das Schweißen von Kunststoffteilen mittels Laserenergie ist an sich bekannt. Die Laserschweißbarkeit wird durch Absorption der Laserenergie im Kunststoffmaterial entweder direkt durch Wechselwirkung mit dem Polymer oder indirekt mit einem dem Kunststoffmaterial zugesetzten lasersensitiven Mittel bewirkt. Das lasersensitive Mittel kann ein organischer Farbstoff oder ein Pigment sein, welches durch Absorption der Laserenergie eine lokale Erhitzung des Kunststoffes bewirkt. Beim Laserschweißen wird das Kunststoffmaterial durch Absorption der Laserenergie im Fügebereich so stark erwärmt, dass das Material aufschmilzt und beide Teile miteinander verschweißen.

In der Praxis beruht das Prinzip der Verbundbildung zwischen Fügepartnern beim Laserschweißen darauf, daß ein der Laserquelle zugewandter Fügepartner eine für das Licht der Laserquelle, das eine spezifische Wellenlänge aufweist, ausreichende Transparenz besitzt, so daß die Strahlung den darunterliegenden Fügepartner erreicht, wo sie absorbiert wird. Infolge dieser Absorption wird Wärme freigesetzt, so daß im Kontaktbereich der Fügepartner nicht nur das absorbierende, sondern auch das lasertransparente Material lokal aufschmelzen und sich partiell vermischen, wodurch nach Abkühlen ein Verbund erzeugt wird. Beide Teile werden im Ergebnis auf diese Weise miteinander verschweißt.

Die Laserschweißbarkeit ist abhängig von der Natur der Kunststoffmaterialien bzw. der diesen zugrunde liegenden Polymere, von Natur und Gehalt an etwaigen lasersensitiven Zusätzen sowie von Wellenlänge und Strahlungsleistung des eingesetzten Lasers. Neben CO₂ und Excimer-Lasern kommen in dieser Technik vermehrt Nd:YAG-Laser (Neodym-dotierte Yttrium-Aluminium-Garnet-Laser) mit den charakteristischen Wellenlängen 1064 nm und 532 nm sowie in jüngerer Zeit auch Diodenlaser zum Einsatz.

Laserschweißbare Kunststoffmaterialien, die lasersensitive Zusätze in Form von Farbstoffen und/oder Pigmenten enthalten, weisen generell eine mehr oder weniger ausgeprägte Färbung und/oder Intransparenz auf. In der Praxis erfolgt die Ausrüstung der als laserabsorbierend einzustellenden Formmasse für das Laserschweißen am häufigsten durch das Einbringen von Ruß.

In DE 10054859 A1 wird ein Verfahren zum Laserschweißen von Kunststoffformteilen beschrieben, wobei der Laserstrahl durch ein lasertransparentes Formteil I geleitet wird und in einem laserabsorbierenden Formteil II eine Erwärmung hervorruft, wodurch die Schweißung erfolgt. Die Formteile enthalten so aufeinander abgestimmte lasertransparente und laserabsorbierende Farbstoffe und Pigmente wie insbesondere Ruß, daß ein homogener Farbeindruck entsteht. Das Material ist naturgemäß nicht transparent. Da Ruß bereits in geringer Konzentration eine starke Schwarzfärbung verursacht sind für das Produkt nur dunkle Farben oder Grautöne realisierbar. Des weiteren ist es zurzeit möglich transparente bzw. lasertransparente Materialien auf gedeckt eingefärbte Materialien zu schweißen.

Grundsätzlich können nach der Lehre der DE 10054859 A1 der lasertransparente Fügepartner und der laserabsorbierende Fügepartner im gleichen Farbton eingestellt werden. Hierzu werden aber völlig unterschiedliche Farbmittel benötigt. Der Fachmann ist hier auf Ausprobieren angewiesen.

Derartige gleiche Farbeinstellungen mit verschiedenen Farbmitteln weisen aber in aller Regel ein unterschiedliches Alterungsverhalten unter Umwelteinfluss auf, so daß sich im Gebrauch und im Laufe der Zeit unterschiedliche Farbänderungen ergeben.

Das Fügen durch Laserschweissen von zwei Kunststoffbauteilen mit der Farbeinstellung weiß/weiß, gleiche Farbe/gleiche Farbe, wobei besonders helle Farbeinstellungen schwierig sind, oder transparent auf weiße oder helle Farbeinstellungen ist nur unzufriedenstellend, schwierig oder mittels Laserschweißen gar nicht möglich. Es besteht daher ein Bedarf an Kunststoffmaterialien der genannten Kombinationen, die durch Laserschweissen gefügt werden können.

Aus dem Stand der Technik sind transparent farbige, transluzent farbige und gedeckt eingefärbte laserschweißbare Kunststoffmaterialien mit genau definierter, frei wählbarer Farbe, insbesondere solche, die darüber hinaus auch noch witterungs- und alterungsbeständig sind, nicht bekannt.

Der vorliegenden Erfindung lag daher die Aufgabenstellung zugrunde, laserschweißbare, durch Farbmittel transparent, transluzent oder gedeckt eingefärbte Kunststoffmaterialien - insbesondere solche mit hellen Farbtönen - bereitzustellen. Dazu sollten lasersensitive Zusätze für Kunststoffmaterialien aufgefunden werden, mit denen diese laserschweißbar gemacht werden können, ohne daß die Transparenz und/oder die Farbe des Materials beeinträchtigt wird.

Die vorliegende Erfindung beschreibt Kunststoffmaterialien, die ein lasersensitives Additiv enthalten, das die Eigenfarbe des Kunststoffes nicht beeinflusst. Dies gilt sowohl für die Einfärbung als auch für das Alterungsverhalten. Die Kunststoffmaterialien enthalten in der Grundausrüstung Farbstoffe und/oder Pigmente zur Einstellung der gewünschten Farbe bzw. Deckung, die an sich lasertransparent sind. Zum Zwecke des Laserschweissens enthält der laserabsorbierende Fügepartner aus diesem Kunststoffmaterial das lasersensitive Additiv.

Überraschend wurde gefunden, daß durch Farbmittel transparent, transluzent oder gedeckt eingefärbte Kunststoffmaterialien durch einen Gehalt an nanoskaligen lasersensitiven partikulären Füllstoffen lasermarkierbar und/oder laserschweißbar gemacht werden können, ohne daß die Farbe und/oder die Transparenz beeinträchtigt werden.

Gegenstand der Erfindung ist somit die Verwendung eines durch Farbmittel transparent, transluzent oder gedeckt eingefärbten Kunststoffmaterials, das dadurch gekennzeichnet ist, daß es durch einen Gehalt an nachfolgend näher spezifizierten nanoskaligen lasersensitiven Partikeln laserschweißbar ist, als laserabsorbierender Fügepartner zum Laserschweißen.

Gegenstand der Erfindung sind auch das Verfahren zur Verschweißung von Kunststoffformkörpern oder Kunststoffhalbzeugen gemäß Anspruch 14 sowie die erfindungsgemäß hergestellten verschweißten Verbundteile.

Die Erfindung basiert auf der Erkenntnis, daß die für die Lasermarkierung aus dem Stand der Technik bekannten lasersensitiven Pigmente bezüglich ihrer Teilchengröße und ihrer Morphologie nicht für transparente Systeme geeignet sind, da sie die kritische Größe von einem Viertel der Wellenlänge des sichtbaren Lichts von ca. 80 nm in aller Regel deutlich überschreiten. Es sind zwar lasersensitive Pigmente mit Primärpartikeln unter 80 nm Teilchengröße bekannt, diese liegen jedoch nicht in Form isolierter Primärpartikel oder kleiner Aggregate vor, sondern sind, wie etwa im Falle von Ruß, nur als hochaggregierte, teilweise agglomerierte Partikel mit deutlich größerem Teilchendurchmesser verfügbar. Die bekannten Lasermarkierungspigmente führen daher zu einer nicht unerheblichen Streuung des Lichts und somit zur Trübung des Kunststoffmaterials.
Die Erfindung basiert weiterhin auf der Erkenntnis, dass die aus dem Stand der Technik bekannten Lasermarkierungspigmente aufgrund ihrer Eigenfarbe und ihrer ungenügenden Dispergierbarkeit die Trübung des Werkstoffs erhöhen, die Farbe des Werkstoffs verfälschen und Farbkorrekturen notwendig machen, wobei die Farbkorrektur nicht zufriedenstellend gelingt und Abweichungen von der gewünschten Farbe in Kauf genommen werden müssen.

Erfindungsgemäß werden den Kunststoffmaterialien, insbesondere solchen, die an sich eine Transparenz oder Transluzenz aufweisen, und die ansonsten farbig, weiß oder gedeckt eingefärbt sind, nanoskalige lasersensitive partikuläre Additive zugesetzt, um diese laserschweißbar zu machen.

Unter nanoskalig ist zu verstehen, daß die größte Dimension der diskreten lasersensitiven Partikel kleiner als 1 µm, also im Nanometerbereich ist. Dabei bezieht sich diese Größendefinition auf alle möglichen Partikelmorphologien wie Primärpartikel sowie etwaige Aggregate und Agglomerate.

Bevorzugt beträgt die Partikelgröße der lasersensitiven Partikel 1 bis 500 nm und insbesondere 5 bis 100 nm. Bei Wahl der Partikelgröße unter 100 nm sind die Partikel per se nicht mehr sichtbar und beeinträchtigen Farbe und Transparenz der Kunststoffmatrix nicht.

In dem Kunststoffmaterial beträgt der Gehalt an lasersensitiven Partikeln zweckmäßigerweise 0,0001 bis 0,1 Gew.-%, bevorzugt 0,001 bis 0,01 Gew.-%, bezogen auf das Kunststoffmaterial. In diesem Konzentrationsbereich wird in aller Regel und für alle in Frage kommenden Kunststoffmaterialien eine ausreichende Laserschweißbarkeit der Kunststoffmatrix bewirkt.

Bei geeigneter Wahl von Partikelgröße und Konzentration in den angegebenen Bereichen ist auch bei transparenten Matrixmaterialien eine Beeinträchtigung der intrinsischen Transparenz ausgeschlossen. So ist es zweckmäßig für lasersensitive Pigmente mit Partikelgrößen über 100 nm den unteren Konzentrationsbereich zu wählen, während bei Partikelgrößen unter 100 nm auch höhere Konzentrationen gewählt werden können.

Als nanoskalige lasersensitive partikuläre Additive zur Herstellung von durch Farbmittel transparent, transluzent oder gedeckt eingefärbte laserschweißbare Kunststoffmaterialien kommen dotiertes Indiumoxid, dotiertes Zinnoxid, dotiertes Antimonoxid und Lanthanhexaborid in Betracht.

Besonders geeignete lasersensitive Additive sind Indium-Zinnoxid (ITO) oder Antimon-Zinnoxid (ATO) sowie dotierte Indium- bzw. Antimon-Zinnoxide. Besonders bevorzugt ist Indium-Zinnoxid und hiervon wiederum das durch einen partiellen Reduktionsprozeß erhältliche "blaue" Indium-Zinnoxid. Das nichtreduzierte "gelbe" Indium-Zinnoxid kann bei höheren Konzentrationen und/oder Partikelgrößen im oberen Bereich einen visuell wahrnehmbaren leicht gelblichen Farbton des Kunststoffmaterials bewirken, während das "blaue" Indium-Zinnoxid zu keiner wahrnehmbaren Farbveränderung führt.

Die erfindungsgemäß einzusetzenden lasersensitiven Partikel sind an sich bekannt und auch in nanoskaliger Form, also als diskrete Partikel mit Größen unter 1 µm und insbesondere im hier bevorzugten Größenbereich kommerziell verfügbar, typischerweise in Form von Dispersionen oder in Form leicht redispergierbarer pulverförmiger Agglomerate von nanoskaligen Teilchen.

Im Regelfall liegen die lasersensitiven Partikel in ihrer Lieferform als agglomerierte Partikel vor, etwa als Agglomerate, deren Teilchengröße zwischen 1 µm bis zu mehreren mm betragen kann. Diese lassen sich mittels des erfindungsgemäßen Verfahrens unter starker Scherung in die Kunststoffmatrix einarbeiten, wodurch die Agglomerate in die nanoskaligen Primärpartikel zerlegt werden.

Die Bestimmung des Agglomerationsgrades erfolgt im Sinne der DIN 53206 (von August 1972).

Nanoskalige Partikel wie insbesondere Metalloxide können beispielsweise durch pyrolytische Verfahren hergestellt werden. Solche Verfahren sind beispielsweise in EP 1 142 830 A, EP 1 270 511 A oder DE 103 11 645 beschrieben. Weiterhin können nanoskalige Metalloxide durch Fällungsverfahren hergestellt werden, wie etwa in DE 100 22 037 beschrieben.

Die nanoskaligen lasersensitiven Partikel können in praktisch alle Kunststoffsysteme eingearbeitet werden, um diesen Laserschweißbarkeit zu verleihen. Typisch sind Kunststoffmaterialien bei denen die Kunststoffmatrix auf Poly(meth)acrylat, Polyamid, Polyurethan, Polyolefinen, Styrolpolymeren und Styrolcopolymeren, Polycarbonat, Silikonen, Polyimiden, Polysulfon, Polyethersulfon, Polyketone, Polyetherketone, PEEK, Polyphenylensulfid, Polyester (wie PET, PEN, PBT), Polyethylenoxid, Polyurethan, Polyolefinen, Cycloolefincopolymeren oder fluorhaltigen Polymeren (wie PVDF, EFEP, PTFE) basiert. Ebenfalls ist eine Einarbeitung in Blends möglich, die als Komponenten oben genannte Kunststoffe beinhalten, oder in von diesen Klassen abgeleitete Polymere, die durch nachträgliche Reaktionen verändert wurden. Diese Materialien sind in großer Vielfalt bekannt und kommerziell erhältlich. Der erfindungsgemäße Vorteil der nanoskaligen Partikel kommt insbesondere bei farbigen transparenten oder transluzenten Kunststoffsystemen wie Polycarbonaten, transparenten Polyamiden (beispielsweise Grilamid® TR55, TR90, Trogamid® T5000, CX7323), Polyethylenterephthalat, Polysulfon, Polyethersulfon, Cycloolefincopolymeren (Topas®, Zeonex®), Polymethylmethacrylat und deren Copolymeren zum tragen, da sie die Transparenz des Materials nicht beeinflussen. Des weiteren sind transparentes Polystyrol und Polypropylen zu nennen, weiterhin alle teilkristallinen Kunststoffe, die durch den Einsatz von Nukleierungsmitteln oder speziellen Verarbeitungsbedingungen zu transparenten Folien oder Formkörpern verarbeitet werden können. Des weiteren können eingefärbte gedeckte Kunststoffe mit den nanoskaligen lasersensitiven Pigmenten ausgerüstet werden.

Die Polyamide werden allgemein hergestellt aus den Bausteinen: verzweigte und unverzweigte aliphatische (6 C-bis 14 C-Atome), alkylsubstituierte oder unsubstituierten cycloaliphatische (14 C- bis 22 C-Atome), araliphatische Diamine (C14 - C22) und aliphatische und cycloaliphatische Dicarbonsäuren (C6 bis C44); letztere können teilweise durch aromatische Dicarbonsäuren ersetzt werden. Insbesondere können sich die transparenten Polyamide zusätzlich aus Monomerbausteinen mit 6 C-Atomen, 11 C-Atomen beziehungsweise 12 C-Atomen zusammensetzen, die sich von Lactamen oder ω-Aminocarbonsäuren ableiten.

Bevorzugt, aber nicht ausschließlich, werden die Polyamide aus den folgenden Bausteinen hergestellt: Laurinlactam oder ω-Aminododekansäure, Azelainsäure, Sebacinsäure, Dodecandisäure, Fettsäuren (C18 - C36; z.B. unter dem Handelsnamen Pripol®), Cyclohexandicarbonsäuren, partieller oder teilweiser Ersatz dieser aliphatischen Säuren durch Isoterephthalsäure, Terephthalsäure, Naphthalindicarbonsäure, Tributylisophthalsäure. Des weiteren finden Verwendung Dekandiamin, Dodecandiamin, Nonandiamin, Hexamethylendiamine verzweigt, unverzweigt oder substituiert, sowie als Vertreter aus der Klasse der alkylsubstituierten/unsubstituierten cycloaliphatischen Diamine Bis-(4-aminocyclohexyl)-methan, Bis-(3-methyl-4-aminocyclohexyl)-methan, Bis-(4-aminocyclohexyl)-propan, Bis-(aminocyclohexan), Bis-(aminomethyl)-cyclohexan, Isophorondiamin oder auch substituierte Pentamethylendiamine.

Beispiele für entsprechende transparente Polyamide sind etwa in EP 0 725 100 und EP 0 725 101 beschrieben.

Besonders bevorzugt sind farbige transparente, transluzente oder gedeckte Kunststoffsysteme auf Basis von Polymethylmethacrylat, Bisphenol-A-Polycarbonat, Polyamid und sogenannter Cycloolefincopolymere aus Norbornen und α-Olefinen die mit Hilfe der erfindungsgemäßen nanoskaligen Partikel laserschweißbar gemacht werden können, ohne Beeinträchtigung von Farbe und Transparenz des Materials.

Bei eingefärbten transparenten, tranluzenten und gedeckten Systemen die neutrale Eigenfarbe dieser nanoskaligen lasersensitiven Additive vorteilhaft, da eine freie Farbwahl bei den Kunststoffmaterialien ermöglicht wird.

Als Farbstoffe kommen solche in Betracht die im interessierenden Bereich zwischen 800 und 1500 nm nur eine geringe Eigenabsorption aufweisen, also lasertransparent sind.

Zur Bezeichung der Farbmittel wird nachfolgend die Nomenklatur der Colour Index (C.I.) verwendet. Alle Farbmittelbezeichnungen wie Solvent Orange oder Pigment Red 101 sind C.I. Bezeichnungen. (Der Einfachheit halber wird der Namenbestandteil C.I. in der nachfolgenden Tabelle 1 weggelassen.)

**Tabelle 1: Lasertransparente Farbmittel**

| Farbmittel C.I. | Bevorzugte Konzentration w% | Besonders bevorzugte Konzentration w% |
|---|---|---|
| Pigment Orange 64 | 0,01 - 0,5 | 0,015 - 0,05 |
| Solvent Orange 60 | 0,01 - 1,0 | 0,01- 0,5 |
| Solvent Orange 106 | 0,01 - 1,0 | 0,01- 0,5 |
| Solvent Orange 111 | 0,01 - 1,0 | 0,01- 0,5 |
| Pigment Red 48 | 0,05 - 1,0 | 0,05 -0,5 |
| Pigment Red 101 | 0,005 - 0,5 | 0,01 - 0,3 |
| Pigment Red 144 | 0,005 - 0,5 | 0,01 - 0,2 |
| Pigment Red 166 | 0,005 - 0,5 | 0,01 - 0,2 |
| Pigment Red 178 | 0,01 - 1,0 | 0,03 - 0,5 |
| Pigment Red 254 | 0,01 - 1,0 | 0,03 - 0,5 |
| Solvent Red 52 | 0,01 - 1,0 | 0,01 - 0,5 |
| Solvent Red 111 | 0,01 - 1,0 | 0,01 - 0,5 |
| Solvent Red 135 | 0,01 - 1,0 | 0,01 - 0,5 |
| Solvent Red 179 | 0,01 - 1,0 | 0,01 - 0,5 |
| Pigment Green 7 | 0,0005 - 1,0 | 0,0005 - 0,5 |
| Pigment Green 17 | 0,01 - 1,0 | 0,03 - 0,5 |
| Pigment Green 50 | 0,005 - 0,5 | 0,005 - 0,05 |
| Solvent Green 3 | 0,01 - 1,0 | 0,01 - 0,5 |
| Solvent Green 20 | 0,01 - 1,0 | 0,01 - 0,5 |
| Pigment Blue 15 | 0,005 - 1,0 | 0,01 - 0,5 |
| Pigment Blue 29 | 0,02 - 5,0 | 0,2 - 2,0 |
| Pigment Blue 36 | 0,015 - 0,5 | 0,015 - 0,25 |
| Pigment Yellow 93 | 0,1 - 1,0 | 0,1 - 0,5 |
| Pigment Yellow 110 | 0,01 - 1,0 | 0,03 - 0,5 |
| Pigment Yellow 150 | 0,0005 - 0,5 | 0,0005 - 0,25 |
| Pigment Yellow 180 | 0,01 - 1,0 | 0,03 - 0,5 |
| Pigment Yellow 184 | 0,005 - 0,5 | 0,005 - 0,25 |
| Solvent Yellow 21 | 0,005 - 0,5 | 0,005 - 0,5 |
| Solvent Yellow 93 | 0,005 - 1,0 | 0,005 - 0,5 |
| Pigment Brown 24 | 0,005 - 0,5 | 0,005 - 0,15 |
| Pigment Violet 19 | 0,01 - 1,0 | 0,03 0,5 |
| Pigment Violet 13 | 0,01 - 1,0 | 0,01 - 0,5 |
| Pigment Violet 46 | 0,01 - 1,0 | 0,01 - 0,5 |

Einige der genannten Farbmittel können in verschiedenen Strukturen vorliegen, die sich geringfügig voneinander unterscheiden. Beispielweise können Pigmente mit verschiedenen Metallionen verlackt sein, wodurch unterschiedliche Formen des Pigments entstehen. Diese Formen werden gemäß C.I. durch Anhängen eines Doppelpunkts und einer Ziffer bezeichnet, z.B. Pigment Red 48 für das mit Natrium verlackte Pigment, Pigment Red 48:1 mit Calcium verlackt, Pigment Red 48:2 mit Barium verlackt, Pigment Red 48:3 mit Strontium verlackt, Pigment Red 48:4 mit Magnesium verlackt. Die hier genannten C.I. Farbmittelbezeichnungen sind so zu verstehen, daß sie alle Formen bzw. Strukturen umfassen. Sie sind im Colour Index verzeichnet.

Die erfindungsgemäßen laserschweißbaren Kunststoffmaterialien liegen typischerweise als Formkörper oder Halbzeuge vor. Auch sind laserschweißbaren Lackschichten möglich.

Die Herstellung der erfindungsgemäßen laserschweißbaren Kunststoffmaterialien erfolgt in an sich bekannter Weise nach in der Kunststoffherstellung und Verarbeitung gängigen und üblichen Techniken und Verfahren. Dabei ist es möglich, die lasersensitiven Additive vor oder während der Polymerisation oder Polykondensation in einzelne Edukte oder Eduktgemische einzutragen oder auch während der Reaktion zuzusetzen, wobei die dem Fachmann bekannten spezifischen Herstellverfahren für die betreffenden Kunststoffe eingesetzt werden. Im Falle von Polykondensaten wie Polyamiden kann beispielsweise eine Einarbeitung des Additives in eine der Monomerkomponenten erfolgen. Diese Monomerkomponente kann dann mit den übrigen Reaktionspartnern in üblicher Weise einer Polykondensationsreaktion unterworfen werden. Weiter können nach Bildung von Makromolekülen die entstandenen hochmolekularen Zwischen- oder Endprodukte mit den lasersensitiven Additiven versetzt werden, wobei auch in diesem Falle alle dem Fachmann geläufigen Verfahren eingesetzt werden können.

Je nach Rezeptur des Kunststoffmatrixmaterials werden flüssige, halbflüssige und feste Rezepturbestandteile oder Monomere sowie gegebenenfalls erforderliche Additive wie etwa Polymerisationsinitiatoren, Stabilisatoren, (wie UV-Absorber, Wärmestabilisatoren), optische Aufheller, Anstistatika, Weichmacher, Entformungshilfsmittel, Schmiermittel, Dispergierhilfsmittel, Antistatika aber auch Füll- und Verstärkungsstoffe oder Schlagzähmodifikatoren etc. in dafür üblichen Vorrichtungen und Anlagen wie Reaktoren, Rührkesseln, Mischern, Walzenstühlen, Extrudern etc. gemischt und homogenisiert, gegebenenfalls geformt und danach zur Aushärtung gebracht. Die nanoskaligen lasersensitiven Partikel werden hierbei zum geeigneten Zeitpunkt in das Material eingebracht und homogen eingearbeitet. Besonders bevorzugt ist die Einarbeitung der nanoskaligen lasersensitiven Partikel in Form einer konzentrierten Vormischung (Masterbatch) mit dem gleichen oder einem kompatiblen Kunststoffmaterial.

Es ist vorteilhaft, wenn die Einarbeitung der nanoskaligen lasersensitiven Partikel in die Kunststoffmatrix unter hoher Scherung in die Kunststoffmatrix oder die flüssige monomerhaltige Gußrezeptur erfolgt. Dies kann durch entsprechende Einstellung der Mischer, Walzenstühle, Extruder vorgenommen werden. Hierdurch wird eine etwaige Agglomeration oder Aggregation der nanoskaligen Partikel zu größeren Einheiten wirksam verhindert; etwa vorhandene größere Agglomerate werden zerkleinert. Dem Fachmann sind die entsprechenden Techniken und die jeweils zu wählenden Verfahrensparameter geläufig.

Kunststoffformkörper und Halbzeuge sind durch Spritzgießen oder Extrudieren aus Formmassen oder durch Gussverfahren aus den Monomeren und/oder Präpolymeren erhältlich.

Die Polymerisation erfolgt nach dem Fachmann bekannten Verfahren, beispielsweise durch Zusatz eines oder mehrerer Polymerisationsinitiatoren und Induktion der Polymerisation durch Erwärmen oder Bestrahlen. Zur vollständigen Umsetzung des oder der Monomere kann sich ein Temperschritt an die Polymerisation anschließen.

Laserschweißbare Lackbeschichtungen sind durch Dispergieren von nanoskaligen lasersensitiven partikulären Feststoffen in üblichen Lackformulierungen, Beschichtung und Trocknung oder Härtung der Lackschicht erhältlich.

Die Gruppe geeigneter Lacke umfasst zum Beispiel Pulverlacke, physikalisch trocknende Lacke, strahlenhärtbare Lacke, ein- oder mehrkomponentige Reaktivlacke wie zum Beispiel Zweikomponenten-Polyurethanlacke.

Nach Herstellung von Kunststoffformteilen oder Lacküberzügen aus den nanoskalige lasersensitive partikuläre Feststoffe enthaltenden Kunststoffmaterialien lassen sich diese durch Bestrahlen mit Laserlicht schweißen.

Das Laserschweißen kann auf einem handelsüblichen Laserschweißgerät, z.B. einem Laser der Fa. Baasel, Type StarMark SMM65, mit einer Leistung zwischen 0,1 und 22 Ampere und einer Vorschubgeschwindigkeit zwischen 1 und 100 mm/s erfolgen. Bei der Einstellung von Laserenergie und Vorschubgeschwindigkeit ist darauf zu achten, dass die Leistung nicht zu hoch und die Vorschubgeschwindigkeit nicht zu klein gewählt werden, um unerwünschtes Verkohlen zu vermeiden. Bei zu geringer Leistung und zu hoher Vorschubgeschwindigkeit kann die Verschweißung unzureichend sein. Auch hierzu können die erforderlichen Einstellungen im Einzelfall ohne weiteres ermittelt werden.

Zur Verschweißung von Kunststoffformkörpern oder Kunststoffhalbzeugen ist erforderlich, daß zumindest eines der zu fügenden Teile zumindest im Oberflächenbereich der Fügefläche aus erfindungsgemäßem Kunststoffmaterial besteht, wobei man die Fügefläche mit Laserlicht, so bestrahlt, daß der lasertransparente Teil durchstrahlt wird bevor der Laserstrahl auf den laserabsorbierende Teil des Kunststoffmaterials trifft, wodurch dieses an der Phasengrenze so stark erwärmt wird, dass beide Teile miteinander verschweißen. Ein gewisser Anpressdruck ist erforderlich, um eine stoffschlüssige Verbindung zu erhalten.

### Beispiel 1:

### Herstellung eines farbig-transparenten, farbigtransluzenten oder gedeckt eingefärbten lasersensitiven Kunststoffformkörpers

Eine farbig-transparente, farbig-transluzente oder gedeckte farbige Kunststoffformmasse, enthaltend ein lasersensitives nanoskaliges Pigment, wird in einem Extruder aufgeschmolzen und in einer Spritzgussform zu Kunststoffformkörpern in Form von Plättchen gespritzt oder zu Platten, Filmen oder Rohren extrudiert.

Die Einarbeitung des lasersensitiven Pigments in die Kunststoffformmasse erfolgt unter starker Scherung um gegebenenfalls agglomerierte Partikel in nanoskalige Primärteilchen zu zerlegen.

### Herstellung der laserabsorbienden (^{a}) Formmassen:

### Ausführungsform A^{a}

Als Kunststoffformasse wird Trogamid® CX 7323, ein Handelsprodukt der Degussa AG, Geschäftsbereich High Performance Polymers, Marl, eingesetzt und mit dem nanoskaligem Indiumzinnoxid Nano®ITO IT-05 C5000 der Firma Nanogate als lasersensitiven Pigment in einer Konzentration von 0,01 Gew.-% und mit C.I. Pigment Red 166 (Scarlett RN, von der Ciba Spezialitätenchemie) als lasertransparentes Farbmittel in einer Konzentration von 0,01 w%, auf einem Extruder Berstorff ZE 25 33 D bei 300°C compoundiert und granuliert.

### Ausführungsform B^{a}

Als Kunststoffformasse wird Vestamid L1901, ein Handelsprodukt der Degussa AG, Geschäftsbereich High Performance Polymers, Marl, eingesetzt und mit dem nanoskaligem Indiumzinnoxid Nano®ITO IT-05 C5000 der Firma Nanogate als lasersensitiven Pigment in einer Konzentration von 0,01 Gew.-% und mit C.I. Pigment Red 166 (Scarlett RN) von der Ciba Spezialitätenchemie)als lasertransparentes Farbmittel in einer Konzentration von 0,01 w%, auf einem Extruder Berstorff ZE 25 33 D bei 260°C compoundiert und granuliert.

### Ausführungsform C^{a}

Als Kunststoffformasse wird Vestamid L1901, ein Handelsprodukt der Degussa AG, Geschäftsbereich High Performance Polymers, Marl, eingesetzt und mit dem nanoskaligem Indiumzinnoxid Nano®ITO IT-05 C5000 der Firma Nanogate als lasersensitiven Pigment in einer Konzentration von 0,01 Gew.-% und mit C.I. Pigment Green 7 (Irgalite Green GFNP, von der Ciba Spezialitätenchemie) als lasertransparentes Farbmittel in einer Konzentration von 0,01 w%, auf einem Extruder Berstorff ZE 25 33 D bei 260°C compoundiert und granuliert.

### Ausführungsform D^{a}

Als Kunststoffformasse wird PLEXIGLAS® 7N, ein Handelsprodukt der Degussa AG, Geschäftsbereich Methacrylate, Darmstadt, eingesetzt. Als lasersensitives Pigment wird nanoskaliges Indiumzinnoxid Nano®ITO IT-05 C5000 der Firma Nanogate in einer Konzentration von 0,01 Gew.-% und mit C.I. Pigment Red 166 (Scarlett RN, von der Ciba Spezialitätenchemie) als lasertransparentes Farbmittel in einer Konzentration von 0,01 w%, auf einem Extruder Berstorff ZE 25 33 D bei 250°C compoundiert und granuliert. Im Falle der Extrusion kann vorteilhaft auch eine höhermolekulare Formmasse vom Typ PLEXIGLAS® 7H eingesetzt werden.

### Ausführungsform E^{a}

Als Kunststoffformasse wird PLEXIGLAS® 7N, ein Handelsprodukt der Degussa AG, Geschäftsbereich Methacrylate, Darmstadt, eingesetzt. Als lasersensitives Pigment wird nanoskaliges Indiumzinnoxid Nano®ITO IT-05 C5000 der Firma Nanogate in einer Konzentration von 0,01 Gew.-% und mit C.I. Pigment Pigment Blue 29 (Ultramarinblau) als lasertransparentes Farbmittel in einer Konzentration von 0,01 w%, auf einem Extruder Berstorff ZE 25 33 D bei 250°C compoundiert und granuliert. Im Falle der Extrusion kann vorteilhaft auch eine höhermolekulare Formmasse vom Typ PLEXIGLAS® 7H eingesetzt werden.

### Ausführungsform F^{a}

Als Kunststoffformasse wird PLEXIGLAS® 7N, ein Handelsprodukt der Degussa AG, Geschäftsbereich Methacrylate, Darmstadt, eingesetzt. Als lasersensitives Pigment wird nanoskaliges Indiumzinnoxid Nano®ITO IT-05 C5000 der Firma Nanogate in einer Konzentration von 0,01 Gew.-% und mit C.I. Pigment Green 7 (Irgalite Green GFNP, von der Ciba Spezialitätenchemie) als lasertransparentes Farbmittel in einer Konzentration von 0,01 w%, auf einem Extruder Berstorff ZE 25 33 D bei 250°C compoundiert und granuliert. Im Falle der Extrusion kann vorteilhaft auch eine höhermolekulare Formmasse vom Typ PLEXIGLAS® 7H eingesetzt werden.

Die Herstellung der entsprechenden lasertransparenten (^{t}) Formmassen A^{t} bis F^{t} erfolgt gemäß vorstehenden Ausführungsformen A^{a} bis F^{a}, nur mit dem Unterschied, daß kein lasersensitives Pigment zugegeben wird.

### Beispiel 2:

### Herstellung eines farbig-transparenten, farbigtransluzenten oder gedeckten eingefärbten lasersensitiven gegossenen PMMA-Halbzeugs

In 1000 Teilen PMMA/MMA-Präpolymerlösung mit einer Viskosität von 1000 cP wird das nanoskalige Indiumzinnoxid Nano®ITO IT-05 C5000 der Firma Nanogate als lasersensitives Pigment in einer Konzentration von 0,01 Gew.-% zusammen mit Dispergierhilfsmittel und Farbmittel dispergiert. Nach Zusatz von 1 Teil AIBN wird in eine Kammer verfüllt und bei 50°C im Wasserbad 2,5 h polymerisiert. Durch anschließendes Tempern bei 115°C im Trockenschrank werden restliche Monomere umgesetzt. Man erhält ein laserabsorbierendes Halbzeug.

Zur Produktion eines lasertransparenten Halbzeugs wird der Ansatz ohne lasersensitives Pigment hergestellt.

Soll ein transparentes Halbzeug hergestellt werden, so wird vorzugsweise ein lösliches Farbmittel aus der Tabelle (Bezeichnung "Solvent") verwendet. Schwach streuende mikronisierte Farbstoffpigmente, wie z. B. Ultramarinblau können für nahezu transparente Einstellungen verwendet werden. Stärker streuende Pigmente eignen sich für transluzente oder gedeckte Varianten. Die Zuordnung der Farbmittel ist dem Fachmann bekannt. Beispiele und Verweise für die Polymerisation werden unter anderem in der DE 43 139 24 gegeben.

### Variante A

Als lasertransparentes Farbmittel wird C.I. Pigment Red 166 (Scarlett RN, von der Ciba Spezialitätenchemie) in einer Konzentration von 0,01 w% eingesetzt.

### Variante B

Als lasertransparentes Farbmittel wird C.I. Pigment Blue 29 (Ultramarinblau), von der Ciba Spezialitätenchemie) in einer Konzentration von 0,01 w% eingesetzt.

### Variante C

Als lasertransparentes Farbmittel wird C.I. Pigment Green 7 (Irgalite Green GFNP, von der Ciba Spezialitätenchemie) in einer Konzentration von 0,01 w% eingesetzt.

### Beispiel 3:

### Durchführung Laserschweißung

### (Guß-PMMA mit 0,01 Gew.-% ITO-Gehalt)

Eine farbige transparente, farbige transluzente oder gedeckt eingefärbte lasersensitive Kunststoffplatte (Abmessungen 60mm*60mm*2mm) aus Guß-PMMA mit einem ITO-Gehalt von 0,01 Gew.-% wird mit einer zweiten Kunststoffplatte aus undotiertem farbigem transparentem, farbigem transluzenten oder im sichtbaren Bereich des Lichts gedeckt aber lasertransparent eingefärbtem Guß-PMMA mit den zu verschweißenden Flächen in Kontakt gebracht. Die Platten werden so in die Schweißhalterung des Starmark-Lasers SMM65 der Fa. Baasel-Lasertechnik eingelegt, daß die undotierte Platte oben liegt, d.h. zuerst vom Laserstrahl durchdrungen wird. Der Fokus des Laserstrahls wird auf die Kontaktfläche der beiden Platten eingestellt. Am Steuergerät des Lasers werden die Parameter Frequenz (2250 Hz), Lampenstrom (22,0 A) und Vorschubgeschwindigkeit (30 mms⁻¹) eingestellt. Nach Eingabe der Größe der zu verschweißenden Fläche (22*4 mm²) wird der Laser gestartet. Am Ende des Schweißvorganges können die verschweißten Kunststoffplatten aus dem Gerät entnommen werden.

Die Haftung wird wie folgt bewertet:
0 Keine Haftung.
1 Geringfügige Haftung.
2 Etwas Haftung; mit geringem Aufwand zu trennen.
3 Gute Haftung; nur mit großem Aufwand und gegebenenfalls mit Hilfe von Werkzeugen zu trennen
4 untrennbare Haftung; Trennung nur durch Kohäsionsbruch

### Ausführungsform A

### Formmasse A^{a} mit Formmasse A^{t}

Eine Standard-Spritzguß-Kunststoffplatte (Abmessungen 60mm*60mm*2mm) aus der Formmasse A^{a} wird mit einer zweiten Standard-Spritzguß-Kunststoffplatte aus der Formmasse A^{t} (Abmessungen 60mm*60mm*2mm) in Kontakt gebracht. Die Platten werden so in die Schweißhalterung des Starmark-Lasers SMM65 der Fa. Baasel-Lasertechnik eingelegt, daß die Platte aus der Formmasse A^{t} oben liegt, d.h. zuerst vom Laserstrahl durchdrungen wird. Am Steuergerät des Lasers werden die Parameter Frequenz (2250 Hz), Lampenstrom (22,0 A) und Vorschubgeschwindigkeit (10 mms⁻¹) eingestellt. Nach Eingabe der Größe der zu verschweißenden Fläche (22*4 mm²) wird der Laser gestartet. Am Ende des Schweißvorganges können die verschweißten Kunststoffplatten aus dem Gerät entnommen werden.

Es werden Haftwerte mit der Note 4 im Handtest erreicht.

### Variante A1:

Als Farbmittel wird Pigment Blue 29 (Ultramarinblau) in dem Kunststoff eingesetzt.
Es werden Haftwerte mit der Note 4 im Handtest erreicht.

### Variante A2:

Als Farbmittel wird Pigment Solvent Orange 60 in dem Kunststoff eingesetzt.
Es werden Haftwerte mit der Note 4 im Handtest erreicht.

### Ausführungsform B

### Formmasse B^{a} mit Formmasse B^{t}

Eine Standard-Spritzguß-Kunststoffplatte (Abmessungen 60mm*60mm*2mm) aus der Formmasse B^{a} wird mit einer zweiten Standard-Spritzguß-Kunststoffplatte aus der Formmasse B^{t} (Abmessungen 60mm*60mm*2mm) in Kontakt gebracht. Die Platten werden so in die Schweißhalterung des Starmark-Lasers SMM65 der Fa. Baasel-Lasertechnik eingelegt, daß die Platte aus der Formmasse B^{t} oben liegt, d.h. zuerst vom Laserstrahl durchdrungen wird. Am Steuergerät des Lasers werden die Parameter Frequenz (2250 Hz), Lampenstrom (22,0 A) und Vorschubgeschwindigkeit (10 mms⁻¹) eingestellt. Nach Eingabe der Größe der zu verschweißenden Fläche (22*4 mm²) wird der Laser gestartet. Am Ende des Schweißvorganges können die verschweißten Kunststoffplatten aus dem Gerät entnommen werden.

Es werden Haftwerte mit der Note 4 im Handtest erreicht.

### Ausführungsform C

### Formmasse C^{a} mit Formmasse C^{t}

Eine Standard-Spritzguß-Kunststoffplatte (Abmessungen 60mm*60mm*2mm) aus der Formmasse C^{a} wird mit einer zweiten Standard-Spritzguß-Kunststoffplatte aus der Formmasse C^{t} (Abmessungen 60mm*60mm*2mm) in Kontakt gebracht. Die Platten werden so in die Schweißhalterung des Starmark-Lasers SMM65 der Fa. Baasel-Lasertechnik eingelegt, daß die Platte aus der Formmasse C^{a} oben liegt, d.h. zuerst vom Laserstrahl durchdrungen wird. Am Steuergerät des Lasers werden die Parameter Frequenz (2250 Hz), Lampenstrom (22,0 A) und Vorschubgeschwindigkeit (10 mms⁻¹) eingestellt. Nach Eingabe der Größe der zu verschweißenden Fläche (22*4 mm²) wird der Laser gestartet. Am Ende des Schweißvorganges können die verschweißten Kunststoffplatten aus dem Gerät entnommen werden.

Es werden Haftwerte mit der Note 4 im Handtest erreicht.

### Ausführungsform D

### Formmasse D^{a} mit Formmasse D^{t}

Eine Standard-Spritzguß-Kunststoffplatte (Abmessungen 60mm*60mm*2mm) aus der Formmasse D^{a} wird mit einer zweiten Standard-Spritzguß-Kunststoffplatte aus der Formmasse D^{t} (Abmessungen 60mm*60mm*2mm) in Kontakt gebracht. Die Platten werden so in die Schweißhalterung des Starmark-Lasers SMM65 der Fa. Baasel-Lasertechnik eingelegt, daß die Platte aus der Formmasse D^{a} oben liegt, d.h. zuerst vom Laserstrahl durchdrungen wird. Am Steuergerät des Lasers werden die Parameter Frequenz (2250 Hz), Lampenstrom (22,0 A) und Vorschubgeschwindigkeit (10 mms⁻¹) eingestellt. Nach Eingabe der Größe der zu verschweißenden Fläche (22*4 MM²) wird der Laser gestartet. Am Ende des Schweißvorganges können die verschweißten Kunststoffplatten aus dem Gerät entnommen werden.

Es werden Haftwerte mit der Note 4 im Handtest erreicht.

### Ausführungsform E

### Formmasse E^{a} mit Formmasse E^{t}

Die Schweißung wird analog der Schweißung von Formmasse D^{a} mit Formmasse D^{t} vorgenommen.

Es werden Haftwerte mit der Note 4 im Handtest erreicht.

### Ausführungsform F

### Formmasse D^{a} mit Formmasse D^{t}

Die Schweißung wird analog der Schweißung von Formmasse D^{a} mit Formmasse D^{t} vorgenommen.

Es werden Haftwerte mit der Note 4 im Handtest erreicht.

## Patentansprüche

1. Verwendung eines durch Farbmittel transparent, transluzent oder gedeckt eingefärbten Kunststoffmaterials als laserabsorbierenden Fügepartner zum Laserschweißen, **dadurch gekennzeichnet, daß** das Kunststoffmaterial durch einen Gehalt an nanoskaligen Partikeln laserschweißbar ist, die ausgewählt sind aus der Gruppe dotiertes Indiumoxid, dotiertes Zinnoxid, dotiertes Antimonoxid, Indium-Zinkoxid, Lanthanhexaborid, Indium-Zinnoxid oder Antimon-Zinnoxid.

2. Verwendung nach Anspruch 1, **dadurch gekennzeichnet, daß** die Partikelgröße der enthaltenen lasersensitiven Partikel 1 bis 500 nm beträgt.

3. Verwendung nach Anspruch 1 oder 2, **dadurch gekennzeichnet, daß** die Partikelgröße der enthaltenen lasersensitiven Partikel 5 bis 100 nm beträgt.

4. Verwendung nach einem der Ansprüche 1 bis 3, **dadurch gekennzeichnet, daß** der Gehalt an lasersensitiven Partikeln 0,0001 bis 0,1 Gew.-%, vorzugsweise 0,001 bis 0,01 Gew.-%, bezogen auf das Kunststoffmaterial, beträgt.

5. Verwendung nach einem der Ansprüche 1 bis 4, **dadurch gekennzeichnet, daß** als nanoskalige lasersensitive Partikel blaues Indium-Zinnoxid enthalten ist.

6. Verwendung nach einem der Ansprüche 1 bis 5, **dadurch gekennzeichnet, daß** die Matrix des Kunststoffmaterials auf Poly(meth)acrylat, Polyamid, Polyurethan, Polyolefinen, Styrolpolymeren und Styrolcopolymeren, Polycarbonat, Silikonen, Polyimiden, Polysulfon, Polyethersulfon, Polyketone, Polyetherketone, Polyphenylensulfid, Polyester, Polyethylenoxid, Polyurethan, Polyolefinen, Cycloolefincopolymeren oder fluorhaltigen Polymeren basiert.

7. Verwendung nach Anspruch 6, **dadurch gekennzeichnet, daß** die Matrix des Kunststoffmaterials auf Polymethylmethacrylat basiert.

8. Verwendung nach Anspruch 6, **dadurch gekennzeichnet, daß** die Matrix des Kunststoffmaterials auf Bisphenol-A-Polycarbonat basiert.

9. Verwendung nach Anspruch 6, **dadurch gekennzeichnet, daß** die Matrix des Kunststoffmaterials auf Polyamid basiert.

10. Verwendung nach einem der Ansprüche 1 bis 9, **dadurch gekennzeichnet, daß** das Kunststoffmaterial als Formkörper, Halbzeug oder Lackbeschichtung vorliegt.

11. Verfahren zur Verschweißung von Kunststoffformkörpern oder Kunststoffhalbzeugen, wobei zumindest eines der zu fügenden Teile zumindest im Oberflächenbereich der Fügefläche aus einem gemäß den Ansprüchen 1 bis 10 verwendeten Kunststoffmaterial besteht, indem man die Fügefläche mit Laserlicht, für das die im Kunststoffmaterial enthaltenen Partikel sensitiv sind, bestrahlt.

12. Verschweißtes Verbundteil, hergestellt gemäß einem der vorhergehenden Ansprüche.

## Claims

1. Use of a plastics material coloured transparently, translucently or opaquely by colorant, as laser-absorbing jointing partner for laser welding, **characterized in that** the plastics material is laser-weldable by virtue of content of nano-scale particles selected from the group of doped indium oxide, doped tin oxide, doped antimony oxide, indium zinc oxide, lanthanum hexaboride, indium tin oxide or antimony tin oxide.

2. Use according to Claim 1, **characterized in that** the particle size of the laser-sensitive particles present is from 1 to 500 nm.

3. Use according to Claim 1 or 2, **characterized in that** the particle size of the laser-sensitive particles present is from 5 to 100 nm.

4. Use according to any of Claims 1 to 3, **characterized in that** the content of laser-sensitive particles is from 0.0001 to 0.1% by weight, preferably from 0.001 to 0.01% by weight, based on the plastics material.

5. Use according to any of Claims 1 to 4, **characterized in that** the nano-scale laser-sensitive particles present comprise blue indium tin oxide.

6. Use according to any of Claims 1 to 5, **characterized in that** the matrix of the plastics material is based on poly(meth)acrylate, on polyamide, on polyurethane, on polyolefins, on styrene polymers and styrene copolymers, on polycarbonate, on silicones, on polyimides, on polysulphone, on polyether sulphone, on polyketones, on polyether ketones, on polyphenylene sulphide, on polyester, on polyethylene oxide, on polyurethane, on polyolefins, on cycloolefin copolymers or on fluorine-containing polymers.

7. Use according to Claim 6, **characterized in that** the matrix of the plastics material is based on polymethyl methacrylate.

8. Use according to Claim 6, **characterized in that** the matrix of the plastics material is based on bisphenol A polycarbonate.

9. Use according to Claim 6, **characterized in that** the matrix of the plastics material is based on polyamide.

10. Use according to any of Claims 1 to 9, **characterized in that** the plastics material takes the form of a moulding, semifinished product or lacquer coating.

11. Process for the welding of plastics mouldings or of semifinished plastics products, where at least one of the parts to be joined, at least in the surface region of the jointing area, is composed of a plastics material used according to Claims 1 to 10, by using laser light to which the particles present in the plastics material are sensitive to irradiate the jointing area.

12. Welded composite part produced according to any of the preceding claims.

## Revendications

1. Utilisation d'un matériau synthétique coloré d'une manière transparente, translucide ou opaque à l'aide d'un colorant en tant que partenaire de jonction absorbant la lumière laser en vue de la soudure au laser, **caractérisée en ce que** le matériau synthétique peut être soudé au laser grâce à une teneur en particules nanométriques, qui sont sélectionnées parmi le groupe de l'oxyde d'indium dopé, de l'oxyde d'étain dopé, de l'oxyde d'antimoine dopé, de l'oxyde d'indium-zinc, de l'hexaborure de lanthane, de l'oxyde d'indium-étain ou de l'oxyde d'antimoine-étain.

2. Utilisation selon la revendication 1, **caractérisée en ce que** la grandeur de particule des particules contenues sensibles au laser est de 1 à 500 nm.

3. Utilisation selon la revendication 1 ou 2, **caractérisée en ce que** la grandeur de particule des particules contenues sensibles au laser est de 5 à 100 nm.

4. Utilisation selon l'une quelconque des revendications 1 à 3, **caractérisée en ce que** la teneur en particules sensibles au laser est de 0,0001 à 0,1 % en poids, de préférence, de 0,001 à 0,01 % en poids, par rapport au matériau synthétique.

5. Utilisation selon l'une quelconque des revendications 1 à 4, **caractérisée en ce que** de l'oxyde bleu d'indium-étain est contenu en tant que particule nanométrique sensible au laser.

6. Utilisation selon l'une quelconque des revendications 1 à 5, **caractérisée en ce que** la matrice du matériau synthétique est basée sur le poly(méth)acrylate, le polyamide, le polyuréthanne, les polyoléfines, les polymères de styrène et les copolymères de styrène, le polycarbonate, les silicones, les polyimides, le polysulfone, le polyéthersulfone, les polycétones, les polyéthercétones, le sulfure de polyphénylène, le polyester, l'oxyde de polyéthylène, le polyuréthanne, les polyoléfines, les copolymères de cyclo-oléfines ou les polymères contenant du fluor.

7. Utilisation selon la revendication 6, **caractérisée en ce que** la matrice du matériau synthétique est basée sur le polyméthylméthacrylate.

8. Utilisation selon la revendication 6, **caractérisée en ce que** la matrice du matériau synthétique se base sur du polycarbonate de bisphénol-A.

9. Utilisation selon la revendication 6, **caractérisée en ce que** la matrice du matériau synthétique est basée sur le polyamide.

10. Utilisation selon l'une quelconque des revendications 1 à 9, **caractérisée en ce que** le matériau synthétique est présent en tant que corps moulé, produit semi-fini ou revêtement de vernis.

11. Procédé en vue de la soudure de corps moulés en matière synthétique ou de produits semi-finis en matière synthétique, au moins une des pièces à joindre se composant, au moins dans la plage superficielle de la surface de jonction, d'un matériau synthétique utilisé selon l'une quelconque des revendications 1 à 10, en irradiant la surface de jonction à l'aide de lumière laser à laquelle les particules contenues dans le matériau synthétique sont sensibles.

12. Pièce composite soudée, fabriquée selon l'une quelconque des revendications précédentes.
